# EUROPEAN PATENT APPLICATION

(11) **EP 0 878 955 A2**
(43) Date of publication of application: **18.11.1998**
(21) Application number: 98303851.4
(22) Date of filing: 15.05.1998
(51) Int. Cl.: H04N 1/06

(54) **Apparatus for moving a radiation beam across a medium**

(30) Priority: 16.05.1997 GB 9710011
(71) Applicant: HK Productions Limited, London NW9 6AQ (GB)
(72) Inventor: Keondjian, Hagop, Muswell Hill, London N10 2QL (GB)
(74) Representative: Knott, Stephen Gilbert

(57) **Abstract**

The invention relates to an apparatus for moving a radiation beam across a medium printable using a radiation beam. The apparatus comprises means (12, 14) for rotating a radiation beam (18) around an axis normal to the length of the beam (18) and a holder (16) having a zone across which the beam (18) moves as the beam (18) is rotated. The holder (16) holds the medium (8), as the medium (8) moves through the holder (16), such that the medium (8) simultaneously has a portion having a linear configuration in a direction normal to the direction of movement of the medium, prior to the zone and a portion having a curved configuration in a direction normal to the direction of movement of the medium, at the zone. In one embodiment, shown in Figure 1, the linear portion is located at a roll (32) of the medium (8) and the curved portion is configured by guides (22) and a former (24). The curvature of the curved portion is such that the beam (18) intersects the curved portion along an arc co-axial with the axis as the beam (18) moves across the zone, the portions being connected by a transitional portion of the medium (8) without creases.

## Description

The invention relates to an apparatus for moving a radiation beam across a medium printable using a radiation beam. The beam may be, for example, a light beam and the medium may be, for example, photographic paper, the beam being used to expose the paper before the paper is developed to form an image on the paper.

A known apparatus for passing a light beam across a sheet of photographic paper comprises means for rotating the beam around an axis normal to the length of the beam and a holder for holding the sheet. The holder holds the sheet such that the entire sheet is curved around the rotational axis of the beam. The curvature is such that, as the beam rotates, it intersects the sheet along an arc co-axial with the axis. By moving the rotating means along the axis the beam may be used to expose a series of parallel, adjacent strips across the sheet.

This type of apparatus is generally used to expose relatively small sheets of paper. This is because, in order to hold the entire sheet of paper in a curved configuration, the holder needs to be approximately as long as the sheet and, the longer the holder, the more bulky and impractical the apparatus becomes.

Another known apparatus is used for exposing rolls of photographic paper. This apparatus also has means for rotating a light beam around an axis normal to the length of the beam and a holder. The holder transfers the paper from the roll to a take-up spool while extending a portion of the paper having a planar configuration between the roll and the spool. As the beam rotates it passes across the planar portion of the paper via an f-theta lens. The use of the f-theta lens helps to overcome a number of problems. Specifically, as the distance between the rotating means and the paper and the angle of incidence of the beam on the paper, vary across the paper, the size and shape of the area of the paper exposed by the beam would, without the lens, change across the paper. Additionally, the beam would only be in focus at certain points across the paper. However, f-theta lenses are expensive and do not correct these problems fully.

According to a first aspect of the invention, there is provided an apparatus for moving a radiation beam across a medium printable using a radiation beam, comprising means for rotating a radiation beam around an axis normal to the length of the beam and a holder having a zone across which the beam moves as the beam is rotated, the holder holding the medium, as the medium moves through the holder, such that the medium simultaneously has a portion having a linear configuration in a direction normal to the direction of movement of the medium, prior to the zone and a portion having a curved configuration in a direction normal to the direction of movement of the medium, at the zone, said curvature being such that the beam intersects the curved portion along an arc co-axial with the axis as the beam moves across the zone, the portions being connected by a transitional portion of the medium without creases.

According to a second aspect of the invention, there is provided an apparatus for moving a radiation beam across a medium printable using a radiation beam, comprising means for rotating a radiation beam around an axis normal to the length of the beam and a medium holder having a zone across which the beam moves as the beam is rotated and means for holding a roll of medium, the medium unwinding from the roll in a linear configuration to move through the holder, the holder configuring the medium to have, at the zone, a portion having a curved configuration in a direction normal to the direction of movement of the medium, said curvature being such that the beam intersects the curved portion along an arc co-axial with the axis as the beam moves across the zone, said portion of the medium having a linear configuration and the curved portion being connected by a transitional portion of medium without creases.

The apparatus of the invention allows medium, for example long sheets of medium and medium in the form of a roll, to be printed without using an f-theta lens.

The following is a more detailed description of embodiments of the invention, by way of example, reference being made to the appended drawings in which:
Figure 1 is a schematic representation showing a first apparatus for exposing a roll of photographic paper;
Figure 2 is a schematic representation showing a former for use with the apparatus of Figure 1 and also showing fins for use with the apparatus of Figure 1; and
Figure 3 is a schematic representative showing a former of a second apparatus for exposing a roll of photographic paper.

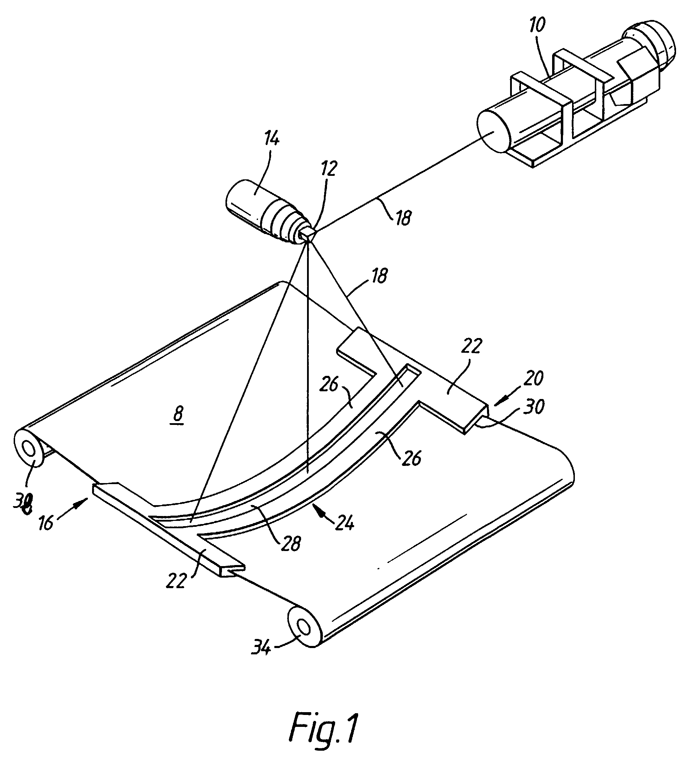

The apparatus (the first apparatus) shown in Figure 1 is used to expose a roll of photographic paper 8 before the paper is developed to produce an image on the paper. The apparatus comprises a light source 10, a mirror 12, a rotator 14 for rotating the mirror 12 and a holder, indicated generally at 16, for holding the photographic paper 8.

The light source 10 is of a known type and produces a beam of laser light 18. The light source varies the intensity of the beam 18, in a known manner, under the control of a computer (not shown).

The mirror 12 is mounted on the rotator 14 and the rotator 14 is positioned relative to the light source 10 such that the mirror 12 reflects the beam 18 towards the holder 16. The arrangement is such that as the mirror 12 is rotated by the rotator 14 the portion of the beam 18 travelling away from the mirror 12 rotates around an axis normal to the length of this portion. The mirror 12 is rotated by the rotator 14 under the control of the computer, as described below.

The holder includes a unit 20 comprising a pair of guides 22 held in a spaced, parallel relationship by a former 24. The former 24 has two pairs of strips - each strip being curved in the direction of its length. Each pair has an upper strip, shown in Figure 1 at 26 and a lower strip (not shown), a convex surface of the upper strip 26 lying closely adjacent a concave surface of the lower strip so as to form a curved slot therebetween. The pairs of strips 26 are spaced from one another in a direction normal to the plane of curvature of the strips 26 so as to define a window 28 between the pairs.

Each end of each strip 26 is attached to a respective one of the guides 22. Each guide 22 has a groove 30 along its length, the upper strips 26 being attached above the grooves 30 and the lower strips being attached below the grooves 30 such that the grooves 30 are continuous with the slots formed by the strips 26.

The curvatures of the strips 26 are precisely predetermined for a purpose described below.

The holder 16 also includes means (not shown) of any suitable known type (such as a spool) for holding a roll 32 of medium in the form of photographic paper 8. The roll holding means are disposed relative to the unit 20 such that the roll 32 is held at a predetermined distance from the unit 20, for a purpose described below.

The holder 16 also includes a spool 34 for taking up photographic paper 8 which has been exposed. The spool 34 is disposed at a predetermined distance from the unit 20, for a purpose described below.

The roll holding means and the spool 34 are disposed relative to one another such that the roll 32 and the spool 34 rotate around parallel axes. The unit 20 is located between the roll 32 and the spool 34. As shown in figure 1, the beam 18 passes through the window 28 as the mirror 12 is rotated. The guides 22 extend through the plane in which the beam 18 rotates.

The apparatus also comprises a drive mechanism (not shown) for advancing paper 8 from the roll 32, through the unit 20 to the take-up spool 34.

The apparatus operates as follows. A roll 32 of photographic paper 8, which may be of a type provided with a spool or which may be spool-less, is mounted on the holding means such that the roll 32 can rotate around its axis. A portion of the roll 32 is then unwound and the end of the roll is introduced between the guides 22 such that the edges of the paper 8 are received in the grooves 30. The end is fed between the guides 22 such that the paper 8 passes firstly through the slot of one of the pairs of strips 26 and then through the slot of the other pair of strips 26. Once the paper 8 has been fed through the full length of the guides 22 the end of the paper is attached to the spool 34.

The drive mechanism is then operated to move the paper 8 smoothly through the unit 20. As the paper 8 moves through the unit 20, each pair of strips 26 nips the paper 8 so as to resist the passage of the paper 8 through the slots. This causes a portion of the paper 8 to extend smoothly and tautly between the pairs across the full area of the window 28. As the paper 8 moves through the unit 20, the smooth, taut portion advances along the paper.

As the paper 8 is moved through the holder 16 the light source 10 and the rotator 14 are operated such that the mirror 12 rotates the light beam 18 across the unit 20. The beam 18 passes through the window 28 to expose the taut, smooth portion of the paper 8. As can be seen in Figure 1, the beam passes across the full width of the paper 8. The beam 18 intersects the smooth, taut portion at an angle slightly less than 90 degrees. In this way, reflection of the beam back from the paper 8 towards the mirror 12 is avoided.

The curvatures of the former strips 26 are such that the former 24 configures the taut, smooth portion of the paper 8 to have a predetermined curvature along its length - i.e., across the width of the paper 8. The curvature of the taut, smooth portion is such that the beam 18 intersects the portion along an arc that is co-axial with the axis around which the beam 18 rotates. Hence, as the beam 18 moves across the curved, taut portion of the paper 8, the distance travelled by the beam remains constant and the beam remains in focus on the paper. Additionally, as the beam 18 passes across the width of the paper 8, the beam 18 impinges on the paper as a dot which remains substantially circular and has a substantially constant diameter. Preferably, the arrangement is such that the diameter of the dot is 1 mm or less.

In this way a first, narrow strip, extending across the paper, is exposed. As the paper 8 is moving while the beam 18 passes across the curved portion, the strip lies obliquely across the paper 8.

The paper 8 continues to move through the unit 20 and the rotation of the beam 18, as described above, is repeated so that a second strip, lying closely adjacent and parallel to the first strip, is exposed on the paper 8. By repeating this process while varying the intensity and colour composition of the beam 18, as the beam 18 passes across the paper, the whole roll of paper 8 can be exposed to form a latent image.

As the paper moves through the unit 20, the roll 32 unwinds and paper 8 that has passed through the unit 20 is taken up on the spool 34. It will be appreciated that the paper 8 unwinds from the roll in a linear configuration. That is to say that the paper 8, as it leaves the roll 32, has a portion extending between the edges of the paper that lies along an imaginary straight line. Of course, as the roll 32 is continuously unwinding, this linear portion advances along the paper 8. The roll 32 is spaced from the unit 20 by a distance sufficiently great that the portion of the paper extending between the roll 32 and the unit 20 bends but does not crease. The minimum distance required to prevent creasing of the paper between the roll 32 and the unit 20 depends on the width of the paper 8, the curvature of the paper 8 at the former 24 and the characteristics of the paper 8. In any particular case, a suitable spacing between the roll 32 and the unit 20 can be readily found by trial and error for a particular paper. Similarly, the spool 34 is spaced from the unit 20 by a distance which is sufficiently great to prevent the portion of the paper 8 extending between the spool 34 and the unit 20 from creasing.

The apparatus, as described above, has a number of advantages. Firstly, the shape and spacing of the pixels in the final image (after development of the paper) are constant. Secondly, as the distance from the light source 10 to the paper 8 remains constant as the beam 18 moves across the paper 8, no colour distortion is caused by any variation in the colour composition of the beam 18 along the length of the beam 18. These advantages are achieved without the need to use an f-theta lens.

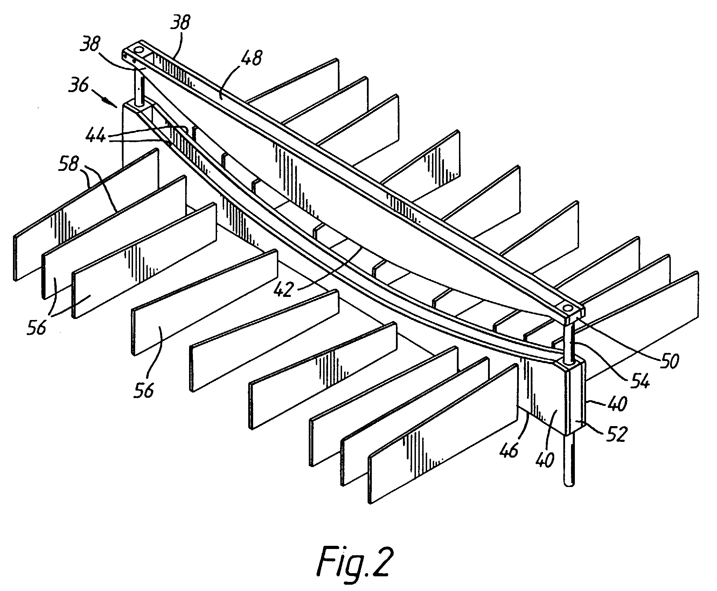

Figure 2 shows an alternative former 36 which may be used in the apparatus described above in place of the unit 20.

The former has two pairs of plates 38, 40. Each pair has an upper plate 38, which has a convexly curved edge 42 extending along the length of the plate 38 and a lower plate 40 which has a concavely curved edge 44 extending along the length of the plate 40. Each lower plate 40 also has a lower, planar surface 46 for a purpose described below.

The upper plates 38 are interconnected at their ends, in a spaced, parallel relationship so as to define a window 48 therebetween, by two blocks 50. The lower plates 40 are also interconnected at their ends, in a spaced, parallel relationship, by two blocks 52 provided with channels therethrough.

Two rods 54 extend through respective ones of the channels and are attached to respective ones of the upper plate blocks 50. The rods 54 serve to mount the upper plates 38 over the lower plates 40 such that the convexly curved edge of each upper plate 38 faces the concavely curved edge of the corresponding lower plate 40 of the pair so as to form a slot between them.

The rods 54 are moveable through their respective channels to alter the sizes of the slots.

Each convexly curved edge 42 and each concavely curved edge 44 is covered by a thin strip of felt (not shown).

Figure 2 also shows a number of fins 56 for a purpose to be described below.

In use, the former 36 and the fins 56 are mounted in the configuration shown in Figure 2, on a mounting (not shown) which lies horizontally between the roll holding means and the spool 34. The former 36 is mounted on the mounting by the lower surfaces 46 of the lower plates 40 such that the plates 38, 40 extend in a direction parallel to the axis of the spool 34, at a position intermediate the spool 34 and the roll holding means such that the beam 18 passes through the window 48 as the beam 18 is rotated.

The fins 56 extend upwardly from the mounting and lie in parallel planes normal to the axis of the spool 34. A first plurality of the fins extend between the roll holding means and the former 36. As shown in Figure 2, the upper edges 58 of those fins 56 of the first plurality that are located near the centre of the former 36 slope downwardly towards the former 36. The upper edges 58 of those fins 56 of the first plurality that are located near the ends of the former 36 slope upwardly towards the former 36.

A second plurality of the fins 56 extend between the former 36 and the spool 34. As shown in Figure 2, the upper edges 58 of those fins 56 of the second plurality located near the centre of the former 36 extend upwardly from the former 36 to the spool 34 and the upper edges 58 of those fins 56 located near the ends of the former 36 extend downwardly from the former 36 to the spool 34.

The upper edges 58 of the fins 56 together define a support surface having a shape that is the required shape of the paper 8 as the paper moves through the holder 16 in accordance with the requirement for non-creasing as discussed above in relation to Figure 1. The concavely curved edges 44 of the lower plates 40 lie on the support surface.

In use, a roll 32 of photographic paper 8 is mounted on the holding means. The rods 54 are then operated to lift the upper plates 38 away from the lower plates 40. The end of the paper 8 is passed over the first plurality of fins 56, through the slot of one pair of plates 38, 40, through the slot of the other pair of plates 38, 40 and over the second plurality of fins 56. The end of the paper 8 is then attached to the spool 34. The rods 54 are then operated so as to lower the upper plates 38 such that the paper 8 is loosely nipped between each pair of plates 38, 40. The drive mechanism is then operated so that the paper 8 advances smoothly from the roll 32 to the spool 34. As the paper 8 passes through the former 36, each pair of plates nips the paper 8 so as to resist passage through the former 36. This is assisted by the felt on the edges 42, 44. This causes a portion of the paper 8 to be held tautly and smoothly between the pairs across the full area of the window 48. Of course, as the paper 8 moves continuously through the former 36, the taut, smooth portion advances along the paper 8. The curvatures of the convexly curved edges 42 and the concavely curved edges 44 determine the curvature of the taut, smooth portion of paper 8. The curvature of this portion of the paper 8 is such that the beam 18 intersects the curved portion along an arc which is co-axial with the axis around which the beam 18 rotates.

The paper 8 is exposed by repeatedly rotating the beam 18 while continuously moving the paper 8 through the former 36, as described above. The upper edges 58 of the fins 56 configure the paper 8 to have the desired shape between the roll 32 and the spool 34.

The spacing between the roll 32 and the former 36 and the spacing between the former 36 and the spool 34 are such that the paper 8 lying between the roll and the former and the paper lying between the former and the spool bend but do not crease.

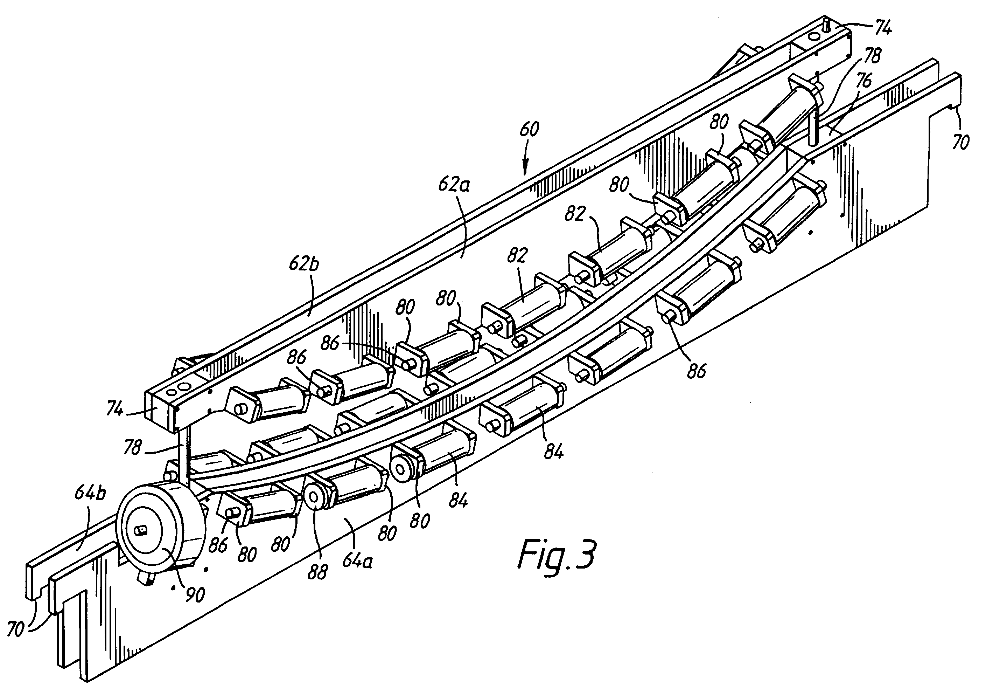

Figure 3 shows a former 60 of a second apparatus (not shown in its entirety) that is described below. Parts of the second apparatus common to the first apparatus described above with reference to Figure 1 are not described in detail.

The second apparatus comprises a light source (not shown), a mirror (not shown) and a rotator (not shown) for rotating the mirror, that are identical to, and arranged relative to one another in an identical manner to, the corresponding parts (light source 10, mirror 12, rotator 14) of the first apparatus.

The second apparatus also includes a holder comprising means (not shown), such as a spool, for holding a roll (not shown) of medium in the form of photographic paper, and the former 60.

The former 60 has two pairs of elongate plates 62a,62b,64a,64b. Each pair has an upper plate 62a,62b, which has a convexly curved edge 66 extending along the length of the plate 62a,62b and a lower plate 64a,64b, which has a concavely curved edge 68 extending along the length of the plate 64a,64b. Each lower plate 64a,64b has a hook-shaped lug 70 at each end of the plate 64a,64b for mounting the former 60 in the holder.

The upper plates 62a,62b are interconnected at their ends by two spacers 74 to hold the plates 62a,62b in a spaced parallel relationship so as to define a window 72 between the plates 62. The lower plates 64a,64b are interconnected near their ends by two blocks, one of which is shown at 76, which hold the lower plates 64a,64b in a spaced parallel relationship. Each block 76 has a respective channel running through the block 76. Two rods 78 are provided and each rod 78 extends through a respective channel and is attached to a respective spacer 74. The rods 78 serve to mount the upper plates 62a,62b over the lower plates 64a,64b such that the convexly curved edge 66 of each upper plate 62a,62b faces the concavely curved edge 68 of the corresponding lower plate 64a,64b. Hence, a slot is formed between the convexly curved edges 66 and the concavely curved edges 68.

The rods 78 are movable through their respective channels to alter the size of the slot.

Each plate 62a,62b,64a,64b is provided with a plurality of successive pairs of lugs 80 that project from the outer face of the associated plate and are positioned adjacent to, and spaced from one another along, the curved edge 66,68 of the plate 62a,62b,64a,64b. On each plate 62a,62b,64a,64b, the lugs 80 of each pair lie in respective parallel planes which lie normal to the plane of the plate 62a,62b,64a,64b and generally normal to the immediately adjacent region of the curved edge 66,68 of the plate 62a,62b,64a,64b.

Each lug 80 is provided with a central hole extending through the lug 80.

Each pair of lugs 80 mounts a respective cylindrical roller of a set of upper rollers 82 and a set of lower rollers 84. A peg 86 at each end of each roller 82,84 engages in a respective hole of the associated pair of lugs 80, so that the roller 82,84 is mounted for rotation between the lugs 80 of the pair.

Hence, each roller 82,84 rotates around an axis that is generally parallel to a tangent to the immediately adjacent region of the curved edge 66,68 of the plate 62a,62b,64a,64b to which the roller 82,84 is mounted.

The rollers 82 mounted on the upper plates 62 are formed from stainless steel and the rollers 84 mounted on the lower plates 64a,64b are formed from or coated with a resilient material such as rubber.

The upstream lower plate 64a (in the direction of travel of the medium)is provided on its outer face, at one end of its concavely curved edge 68, with a motor 90 for a purpose described below. Additionally, on this lower plate 64a, the free ends of the pegs 86 are fitted with respective drive wheels 88 (with the exception of the peg 86 located closest to the motor 90 - only two drive wheels 88 are shown in Figure 3). Each drive wheel 88 rotates with the corresponding roller 84.

Hence, as shown in Figure 3, adjacent rollers 84 on the lower plate 64a have respective mutually adjacent drive wheels 88 that generally face one another. Each pair of such adjacent drive wheels 88 is connected by a suitable flexible coupling (not shown), such as a corrugated steel spring.

The motor 90 is connected by a suitable coupling (not shown) to the peg 86 (without a drive wheel) closest to the motor so that the motor drives the corresponding roller 84. Rotation of this roller 84 is transmitted to the other rollers 84 on the lower plate 64a by the flexible couplings so that they rotate together.

By moving the rods 78 through the channels in the block 76, the plates 62a,62b,64a,64b can be moved from an open configuration (as shown in Figure 3), in which the upper rollers 82 on each upper plate 62a,62b are spaced from the lower rollers 84 on the lower plates 64a,64b, to a closed configuration (not shown), in which the circumferential surface of each upper roller 82 is brought into contact with (or is closely adjacent) the circumferential surface of a corresponding lower roller 84 to form a nip. Hence, when the plates 62a,62b,64a,64b are in the closed configuration, there is a first set of nips located at the upstream side of the slot (the same side as the motor 90) and a second set of nips located at the other side of the slot. The nips of each set are spaced from one another along a respective imaginary curve having the same curvature as, and being parallel to, the slot.

Additionally, the holder also comprises a guillotine (not shown). The guillotine is positioned adjacent the lower plate 64b (without the motor) such that the former 60 lies between the roll holding means and the guillotine. The guillotine has two, curved, cooperating cutting edges that have the same curvature as, and are parallel to, the slot.

The second apparatus also comprises a computer that controls the intensity of the beam emitted by the light source, the rotation of the rotator and the operation of the motor 90.

In use, a roll of photographic paper is fitted to the spool - the roll lying parallel to the plates 62a,62b,64a,64b.

The plates 62a,62b,64a,64b are then moved to the open configuration and the end of the roll of paper is fed between the upper plates 62a,62b and the lower plates 64a,64b and between the cutting edges of the guillotine. The plates 62a,62b,64a,64b are then moved to the closed configuration so that the first set of nips hold the paper in a generally curved configuration prior to the slot and the second set of nips hold the paper in a similar, generally curved configuration after the slot. The spacing between the convexly curved edges 66 and the concavely curved edges 68 is such that the paper is held in a precisely determined, curved configuration in the slot. The curvature of the paper in the slot is similar to the curvature of the paper at the first and second set of nips.

The computer then operates the motor 90 to rotate the rollers 84 mounted on the lower plate 64a so as to continuously drive the paper through the slot and between the second set of nips. Simultaneously, the computer controls the light source and the rotator to move the light beam across the portion of the paper held in the slot - the light beam passing through the window 72. In this way, the apparatus produces a latent image on the photographic paper, in a manner similar to that described above for the first apparatus. After a latent image has been produced, the guillotine is operated to cut the paper, after the former 60.

It has been found that the former 60 allows the use of a shorter distance between the roll of paper and the former 60 (as compared to when the former 24 or the former 36 is used as described above with reference to Figures 1 and 2) without the formation of creases in the paper intermediate the roll and the former 60.

It will be appreciated that various modifications may be made to the second apparatus. For example, the rollers 84 on the lower plate 64b may also be driven. In this case, the rollers 84 on the lower plate 64b (after the slot) could be driven faster than the rollers 84 on the lower plate 64a (before the slot). This would help to maintain the paper in the slot taut. Alternatively, the rollers 84 on the lower plate 64a could be urged to rotate in the reverse direction while the rollers 84 on the lower plate 64b could be driven (with a greater rotational moment) in the forward direction. This would also result in the paper being held taut within the slot.

It will be appreciated that either apparatus described above may be modified. For example, it is not necessary for the paper to be fed through the holder from a roll. The paper could be provided in another configuration, for example, a fan-fold configuration, the paper being transported to the former via a part of a holder configuring the paper to have a linear configuration in a direction normal to the direction of movement of the paper.

## Claims

1. Apparatus for moving a radiation beam (18) across a medium (8) printable using said radiation beam (18), comprising means (14) for rotating a radiation beam around an axis normal to the length of the beam (18) and a holder (16) having a zone across which the beam (18) moves as the beam (18) is rotated, the holder (16) holding the medium (8), as the medium (8) moves through the holder (16), such that the medium (8) simultaneously has a portion having a linear configuration in a direction normal to the direction of movement of the medium, prior to the zone and a portion having a curved configuration in a direction normal to the direction of movement of the medium (8), at the zone, said curvature being such that the beam (18) intersects the curved portion along an arc co-axial with said axis as the beam (18) moves across the zone, the portions being connected by a transitional portion of the medium (8) without creases.

2. Apparatus according to claim 1 wherein the holder (16) holds the medium in a roll (8), the medium unwinding from the roll (8) in said linear configuration before passing to said zone.

3. Apparatus for moving a radiation beam across a medium (8) printable using a radiation beam (18), comprising means for rotating a radiation beam (18) around an axis normal to the length of the beam (18) and a medium holder (16) having a zone across which the beam (18) moves as the beam (18) is rotated and means for holding a roll of medium (8), the medium (8) unwinding from the roll in a linear configuration to move through the holder (16), the holder (16) configuring the medium (8) to have, at the zone, a portion having a curved configuration in a direction normal to the direction of movement of the medium (8), said curvature being such that the beam (18) intersects the curved portion along an arc co-axial with the axis as the beam moves across the zone, the curved portion and said portion of the medium (8) having a linear configuration being connected by a transitional portion of medium without creases.

4. Apparatus according to any one of claims 1 to 3 wherein said holder (16) defines a support surface having a shape that is the required shape of the medium as the medium moves through the holder.

5. Apparatus according to claim 4 wherein the support surface includes a plurality of fins (56), each fin lying in a plane parallel to the direction of movement of the medium (8) through the holder (16), each fin (56) having an edge (58) and the edges (58) together defining said support surface.

6. Apparatus according to any one of claims 1 to 5 wherein the holder (16) includes a former (60), the former (60) being located at the beam zone and comprising a pair of members (26,38,40,62a,62b,64a,64b) defining a slot between which the medium (8) passes and by which the medium is configured into said curved configuration, the former (24) including a window through which the beam passes to move across the medium.

7. Apparatus according to claim 6 wherein the former comprises two pairs of plates (38,40;62a,62b,64a,64b) each pair lying in a plane normal to the direction of movement of the medium through the holder and the pairs being spaced to form said window, the plates (38,40;62a,62b,64a,64b) of each pair having respective adjacent edges (42,44,66,68) and said slot extending between said adjacent edges (42,44,66,68).

8. Apparatus according to claim 7 wherein each pair includes an upper plate (38,62a,62b) and a lower plate (40,64a,64b), the upper plates (38,62) being interconnected to form one of said members and the lower plates (40,64a,64b) being interconnected to form the other one of said members, the interconnected upper plates (38,62a,62b) being mounted on said interconnected lower plates (40,64a,64b).

9. Apparatus according to claim 8 wherein the connected upper plates (38,62a,62b) are movable relative to the connected lower plates (40,64a,64b) in a direction parallel to the planes of the plates to alter the sizes of the slots.

10. Apparatus according to any one of claims 7 to 9 wherein each one of said adjacent edges (42,44) is covered with felt for contacting the medium in the slot, friction between the medium and the felt resisting the passage of the medium through the slot.

11. Apparatus according to any one of claims 6 to 10 when dependent on 5 wherein the fins (56) are interrupted along the lengths thereof to form a gap, the former (24,60) being located in said gap.

12. Apparatus according to claim 11 when dependent on claim 8 or claim 9 wherein the edges (44) of the lower plates (40) are on said supporting surface as defined by the edges (58) of the fins (56) adjacent said gap.

13. Apparatus according to any one of claims 1 to 3 wherein the holder (24) comprises a pair of spaced guides (22), each guide receiving a respective edge of the medium (8) and the guides (22) extending through said beam zone, the guides (22) being so spaced as to form the medium (8) into said curved configuration.

14. Apparatus according to claim 13 wherein the holder includes a former (24) located at the beam zone and comprising a pair of members defining a slot between which the medium (8) passes and by which the medium (8) is configured into said curved configuration, the former (24) including a window through which the beam (18) passes to pass across the medium (8).

15. Apparatus according to claim 14 wherein the former (24) includes two pairs of curved strips, the pairs being spaced to form said window, each pair defining a respective curved slot therebetween.

16. Apparatus according to any one of claims 13 to 15 wherein the guides (22) and the former (24) are a single unit.

17. Apparatus according to any preceding claim wherein the radiation beam is a light beam (18) and the apparatus includes a light source (10) for generating the light beam (18), the light beam (18) having, at the zone, a circular cross-section with a diameter of 1 mm or less.

18. Apparatus according to any one of claims 1 to 5, wherein the holder comprises a former (60) including a plurality of rollers (82,84) and means forming a respective nip with each of the rollers, each nip receiving the medium (8) adjacent to and prior to the zone and the nips being spaced along a curve having a curvature substantially the same as said curvature of the curved portion.

19. Apparatus according to claim 18, wherein the rollers (82,84) are driven to move the medium (8) through the zone.

20. Apparatus according to claim 18 or claim 19, wherein the former (60) includes a second plurality of rollers (82,84) and second means forming a respective nip with each roller (82,84) of the second plurality, each nip formed by the second plurality of rollers (82,84) and the second nip forming means receiving the medium adjacent to and after the zone and said nips being spaced along a curve having a curvature substantially the same as said curvature of the curved portion.

21. Apparatus according to claim 20, wherein the rollers of the second plurality of rollers (82,84) are driven to move the medium (8) through the zone.

22. Apparatus according to claim 21, wherein the rollers (82,84) of the first plurality and the rollers (82,84) of the second plurality are selectively driven to hold the medium (8) taut at the zone.

23. Apparatus according to any one of claims 18 to 22, wherein the or each nip forming means comprises a or a respective further plurality of rollers (82,84), each nip being formed by a respective roller (82,84) of the first mentioned or second plurality and a respective roller (82,84) of the or the corresponding further plurality.

24. Apparatus according to claim 23, wherein at least one roller (82,84) forming each nip is formed from a resilient material.

25. Apparatus according to any one of claims 18 to 24, wherein the former (60) defines at the zone a slot through which the medium passes, the slot holding said curved portion in said curved configuration.

26. Apparatus according to any one of claims 18 to 25, wherein the medium (8) is unheld between adjacent ones of the nips receiving the medium prior to the zone.
